# EUROPÄISCHE PATENTSCHRIFT

(11) **EP 1 631 523 B1**
(45) Veröffentlichungstag und Bekanntmachung des Hinweises auf die Patenterteilung: **27.11.2019**
(21) Anmeldenummer: 04739815.1
(22) Anmeldetag: 11.06.2004
(51) Int. Cl.: C01B 13/14, C01B 33/18, C04B 35/14, C04B 35/632, C03C 17/00, B05D 1/18, C09C 1/30, C09C 1/62, C09C 3/10, C09C 3/12, C08G 18/71, C08G 18/00, C08G 18/80, C08K 9/04, B82Y 30/00, B82Y 40/00

(54) **ABRIEBFESTE OPTISCHE SCHICHTEN UND FORMKÖRPER**
WEAR-RESISTANT OPTICAL LAYERS AND MOULDED BODIES
COUCHES ET CORPS MOULES OPTIQUES RESISTANT A L'ABRASION

(30) Priorität: 12.06.2003 DE 10326538
(43) Veröffentlichungstag der Anmeldung: 08.03.2006
(73) Patentinhaber: Leibniz-Institut für Neue Materialien gemeinnützige GmbH, 66123 Saarbrücken (DE)
(72) Erfinder: BECKER-WILLINGER, Carsten, 66130 Saarbrücken (DE); KLUKE, Martin, 82272 Moorenweis (DE); SCHMIDT, Helmut, 66130 Saarbrücken -Güdingen (DE)
(74) Vertreter: Patentanwälte Gierlich & Pischitzis Partnerschaft mbB
(86) Internationale Anmeldenummer: PCT/EP2004/006325
(87) Internationale Veröffentlichungsnummer: WO 2004/110926

(56) Entgegenhaltungen:
- EP-A- 0 410 264
- EP-A1- 0 768 351
- WO-A-01/40394
- WO-A-98/51747
- US-A- 5 998 504

## Beschreibung

Die Erfindung betrifft Zusammensetzungen, die oberflächenmodifizierte nanoskalige Feststoffteilchen mit Hydroxygruppen und/oder Epoxidgruppen, und mindestens eine blockierte Isocyanatverbindung umfassen, und aus diesen Zusammensetzungen herstellbare Beschichtungen und Formkörper, die unter Bildung von Urethanbindungen oder entsprechenden Bindungen gehärtet sind.

Abriebfeste Schichten mit hoher optischer Transparenz für optische Bauteile oder hochtransparente Schichten auf optischen Bauteilen sind zu einem wichtigen Untersuchungsgebiet geworden. Als bedeutsam haben sich Nanokompositbeschichtungen auf der Basis von Sol-Gel-Prozessen herausgestellt, bei denen Organosilane zusammen mit Nanopartikeln cokondensiert werden und harte Schichten bilden. Werden Silane verwendet, die polymerisierbare Gruppen (Methacrylate oder Epoxide) enthalten, so können solche Schichten auch UV-härtbar und photostrukturierbar sein. Der Nachteil solcher Beschichtungen ist jedoch die mangelnde UV-Beständigkeit und auch die mit einer hohen Sprödigkeit verbundene unzureichende Kratzfestigkeit.
WO 01/40394 A1 offenbart die Oberflächenmodifikation von Partikeln unter wasserfreien Bedingungen zum Einsatz in anorganischen fluorhaltingen Kondensaten.
Daher bestand die Aufgabe, Beschichtungen oder Formkörper bereitzustellen, die eine hohe Transparenz aufweisen und darüber hinaus eine hohe Abriebfestigkeit zeigen.
Die erfindungsgemäße Aufgabe konnte überraschenderweise gelöst werden durch eine Zusammensetzung umfassend oberflächenmodifizierte nanoskalige Feststoffteilchen, die an der Oberfläche organische Reste mit Hydroxygruppen und/oder Epoxidgruppen, aufweisen, und mindestens ein Isocyanat, dessen Isocyanatgruppen blockiert sind.
Nach dem Aushärten dieser Zusammensetzung entstehen Schichten oder Formkörper von hoher optischer Qualität, die z. B. zum Beschichten von Linsen und anderen optischen Formkörpern herangezogen werden können. Überraschenderweise zeigen Abriebtests, dass solche Schichten gegenüber vergleichbaren Polyurethanen ohne die erfindungsgemäß eingesetzten nanoskaligen Feststoffteilcheneine bis zu 20-fach verbesserte Abriebfestigkeit haben. So ergeben sich bei herkömmlichen Polyurethanen ohne Nanopartikel eine Abriebfestigkeit von ca. 40 mg Gewichtsverlust nach dem Standard-Taber-Test, während die erfindungsgemäßen nanopartikelhaltigen Polyurethanschichten Abriebfestigkeiten von bis zu 2 mg nach dem Standard-Taber-Abrader-Test zeigen.

Die Zusammensetzung enthält oberflächenmodifizierte nanoskalige Feststoffteilchen. Die nanoskaligen Feststoffteilchen, im Folgenden auch als Nanopartikel bezeichnet, sind anorganische Nanopartikel. Es kann eine Art von nanoskaligen Feststoffteilchen oder eine Mischung verschiedener nanoskaliger Feststoffteilchen eingesetzt werden.

Beispiele für metallischen Nanopartikel sind solche aus Kupfer, Silber, Gold, Platin, Palladium, Nickel, Chrom und Titan sowie diese Metalle enthaltenden Legierungen wie z.B. (Edel-)Stahl, Messing und Bronze.

Beispiele für Nanopartikel, die Halbleitereigenschaften aufweisen können, sind solche aus Silicium oder Germanium. Ferner können einige der nachstehenden Metallverbindungen Halbleitereigenschaften aufweisen, wie z. B. Verbindungen aus Elementen der Hauptgruppen III und V (z. B. GaAs oder InP), der Nebengruppe II und der Hauptgruppe VI (z.B. Verbindungen von Zn oder Cd mit O, S, Se oder Te) oder Mischoxide (z.B. Metall-Zinn-Oxide, wie Indium-Zinn-Oxid (ITO), Antimon-Zinn-Oxid (ATO) oder fluor-dotiertes Zinnoxid (FTO). Die Materialien mit Halbleitereigenschaften sind dem Fachmann bekannt und Beispiele finden sich auch in der folgenden Aufzählung.

Bei den nanoskaligen anorganischen Feststoffteilchen handelt es sich um SiO₂, Al₂O₃, Indium-Zinn-Oxid (ITO), Antimon-Zinn-Oxid (ATO), AIOOH, Ta₂O₃, ZrO₃ und TiO₂, wobei SiO₂ besonders bevorzugt ist.

Die Herstellung dieser nanoskaligen Teilchen kann auf übliche Weise erfolgen, z.B. durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren. Diese Verfahren sind in der Literatur ausführlich beschrieben. Das Sol-Gel-Verfahren wird weiter unten eingehend erläutert.

Die Partikel können in Form eines Pulvers oder direkt als Dispersion in einem Dispergiermittel verwendet werden. Beispiele für im Handel erhältliche Dispersionen sind die wässrigen Kieselsole der Bayer AG (Levasile®) sowie kolloidale Organosole von Nissan Chemicals (IPA-ST, MA-ST, MEK-ST, MIBK-ST), Als Pulver sind z.B. pyrogene Kieselsäuren von Degussa (Aerosil-Produkte) erhältlich.

Nanoskalige Feststoffteilchen besitzen einen mittleren Teilchendurchmesser (Volumenmittel, Messung: wenn möglich röntgenographisch, sonst dynamische Laserlichtstreuung (mit einem Ultrafein-Partikelanalysator (UPA)) unter 1 µm, in der Regel unter 500 nm. Die nanoskaligen Feststoffteilchen besitzen bevorzugt einen mittleren Teilchendurchmesser von nicht mehr als 300 nm, bevorzugt nicht mehr als 200 nm und insbesondere nicht mehr als 50 nm und mehr als 1 nm und vorzugsweise mehr als 2 nm, z.B. 1 bis 20 nm. Dieses Material kann in Form eines Pulvers eingesetzt werden, es wird jedoch vorzugsweise in Form eines Sols oder einer Suspension verwendet.

Bei den erfindungsgemäß eingesetzten nanoskaligen Feststoffteilchen handelt es sich um mit organischen Oberflächengruppen modifizierte Feststoffteilchen, wobei die organischen Oberflächengruppen Hydroxygruppen und/oder Epoxygruppen, aufweisen. Bei der Oberflächenmodifizierung von nanoskaligen Feststoffteilchen handelt es sich um ein bekanntes Verfahren, wie es z.B. von der Anmelderin in WO 93/21127 (DE 4212633), WO 96/31572 oder WO 98/51747 (DE 19746885) beschrieben wurde. Auf alle diese Dokumente wird bezüglich der nanoskaligen Feststoffteilchen und ihrer Oberflächenmodifizierung Bezug genommen.

Die Herstellung der Oberflächenmodifizierten nanoskaligen Feststoffteilchen kann prinzipiell auf zwei verschiedenen Wegen durchgeführt werden, nämlich zum einen durch Oberflächenmodifizierung von bereits hergestellten nanoskaligen Feststoffteilchen und zum anderen durch Herstellung dieser nanoskaligen Feststoffteilchen unter Verwendung von einer oder mehreren Verbindungen, die über entsprechende Gruppierungen für die Oberflächenmodifizierung verfügen. Diese beiden Wege werden in obengenannten Patentanmeldungen näher erläutert.

Als Oberflächenmodifizierungsmittel, insbesondere zur Oberflächenmodifizierung bereits vorliegender nanoskaliger Teilchen, eignen sich alle (vorzugsweise niedermolekularen) Verbindungen als Oberflächenmodifizierungsmittel, die zum einen über eine oder mehrere Gruppen verfügen, die mit auf der Oberfläche der nanoskaligen Feststoffteilchen vorhandenen reaktionsfähigen Gruppen reagieren oder zumindest wechselwirken können (Anbindungsgruppe), und zum anderen mindestens eine Gruppe mit aktivem Wasserstoff oder eine Vorstufe davon, insbesondere mindestens eine Hydroxy- oder Epoxidgruppe, aufweisen. Beispielsweise befinden sich auf Nanopartikeln als Oberflächengruppen reaktionsfähige Gruppen als Restvalenzen, wie Hydroxygruppen und Oxygruppen, z.B. bei Metalloxiden, oder Thiolgruppen und Thiogruppen, z.B. bei Metallsulfiden, oder Amino-, Amid- und Imidgruppen, z.B. bei Nitriden.

Eine Oberflächenmodifizierung der nanoskaligen Teilchen kann z.B. durch Mischen der nanoskaligen Teilchen mit nachstehend erläuterten geeigneten Oberflächenmodifizierungsmitteln gegebenenfalls in einem Lösungsmittel und unter Anwesenheit eines Katalysators erfolgen. Bei Silanen als Oberflächenmodifizierungsmittel genügt z.B. ein mehrstündiges Rühren mit den nanoskaligen Teilchen bei Raumtemperatur zur Modifizierung. Natürlich hängen zweckmäßige Bedingungen, wie Temperatur, Mengenverhältnisse, Dauer der Umsetzung usw., von den jeweiligen speziellen Reaktionspartnern und dem gewünschten Belegungsgrad ab.

Die Oberflächenmodifizierungsmittel können z.B. sowohl kovalente als auch ionische (salzartige) oder koordinative Bindungen zur Oberfläche der nanoskaligen Feststoffteilchen ausbilden, während unter den reinen Wechselwirkungen beispielhaft Dipol-Dipol-Wechselwirkungen, Wasserstoffbrückenbindungen und van der Waals-Wechselwirkungen zu nennen sind. Erfindungsgemäß ist die Ausbildung von kovalenten Bindungen.

Erfindungsgemäß bevorzugt ist es auch, dass die Oberflächenmodifizierungsmittel ein relativ niedriges Molekulargewicht aufweisen. Beispielsweise kann das Molekulargewicht weniger als 1.500, insbesondere unter 1.000 und vorzugsweise unter 500 oder unter 400 oder sogar unter 300 betragen. Dies schließt selbstverständlich ein deutlich höheres Molekulargewicht der Verbindungen nicht aus (z.B. bis zu 2.000 und mehr).

Ferner weist das Oberflächenmodifizierungsmittel insbesondere eine funktionelle Gruppe mit einem aktiven Wasserstoff oder eine Vorstufe davon auf. Es ist bekannt, dass Isocyanate mit Gruppen mit aktivem Wasserstoff reagieren können. Durch die Anbindung der H-aktiven Gruppen oder deren Vorstufen an die Nanopartikel über das Oberflächenmodifizierungsmittel wird bei der Härtung die Vemetzungsreaktion zwischen Nanopartikel und Isocyanat ermöglicht.

Bei den Gruppen mit aktivem Wasserstoff handelt es sich um Hydroxylgruppen (-OH). Als Reaktionsprodukte bilden sich bei der Umsetzung mit Isocyanaten Urethane (bei Hydroxyl).

Als eine Vorstufe der Gruppe mit aktivem Wasserstoff wird dabei hier eine Gruppe bezeichnet, die in der Zusammensetzung vor oder während der Härtung in eine Gruppe mit aktivem Wasserstoff überführbar ist. Wichtige Vertreter für diese Vorstufen sind die Epoxidgruppe, die z. B. durch hydrolytische Reaktionen in eine Hydroxygruppe überführbar sind. Die Umwandlung der Epoxidgruppe in die Hydroxygruppe wird weiter unten ausführlicher erläutert.

Als Oberflächenmodifizierungsmittel zur Herstellung der Oberflächenmodifizierung mit organischen Resten mit einer Gruppe mit aktivem Wasserstoff oder einer Vorstufe eignen sich Oberflächenmodifizierungsmittel mit einer Anbindungsgruppe zur Anbindung an die Nanopartikel, die natürlich entsprechend der chemischen Natur der Nanopartikel auszuwählen ist. Ferner weist das Oberflächenmodifizierungsmittel als funktionelle Gruppe mindestens eine Gruppe mit aktivem Wasserstoff oder eine Vorstufe davon auf.

Bei den eingesetzten Epoxidgruppen handelt es sich um eine Vorstufe, die in der Zusammensetzung in eine Hydroxylgruppe überführbar ist, d.h.,
die Epoxidgruppen können in der Zusammensetzung vor oder während der Härtung in Hydroxygruppen überführt werden, um für die Urethanbindungsbildung zur Verfügung zu stehen, die im Härtungsschritt erfolgt. Die Überführung kann z. B. durch Hydrolyse erfolgen. Hierfür können in der Zusammensetzung z. B. Wasser oder andere Verbindungen mit aktiven H-Atomen und gegebenenfalls ein Katalysator (z. B. eine Säure oder eine Base) vorhanden sein. Die Epoxidgruppen, falls vorhanden, werden insbesondere vor der Härtung oder während der Härtung in Hydroxygruppen überführt, die dann mit den Isocyanaten unter Bildung von Urethanbindungen reagieren können. Die Überführung der Epoxidgruppen in Hydroxylgruppen kann z. B. direkt nach durchgeführter Oberflächenmodifizierung oder erst unmittelbar vor oder während der Härtung stattfinden, z. B. nachdem die Zusammensetzung auf ein Substrat aufgetragen oder in eine Form gebracht wurde. Die Umwandlung in Hydroxgruppen kann z. B. durch Erwärmung eingeleitet werden. Dem Fachmann sind die Maßnahmen zur Überführung bekannt und er kann die Bedingungen so wählen, dass die Überführung zum gewünschten Zeitpunkt stattfindet.
Bei der Anbindungsgruppe, die das Modifizierungsmittel umfasst, handelt es sich z. B. um Si-OH-Gruppen, hydroly- sierbare Reste von Silanen (nachstehend erläuterte Gruppen SiX). Als Anbindungsgruppe werden hydrolysierbare Gruppen von Silanen eingesetzt, wobei die Anbindungsgruppe natürlich in Abhängigkeit von der Natur der eingesetzten Nanopartikel ausgewählt wird.

Die Oberflächenmodifizierungsmittel sind hydrolysierbare Silane, so dass die nanoskaligen Feststoffteilchen mit hydrolysierbaren Silanen, die an einem nicht hydrolysierbaren Substituenten eine Gruppe mit aktivem Wasserstoff oder eine Vorstufe davon, nämlich eine Epoxidgruppe oberflächenmodifiziert worden sind.

Oberflächenmodifizierungsmittel sind daher Epoxysilane und Silane mit mindestens einer Hydroxylgruppe. Da die Silane mit Hydroxylgruppen häufig nicht sehr beständig sind, da sie über Umesterung zur Kondensation neigen, ist der Einsatz von Epoxysilanen bevorzugt. In einer bevorzugten Ausführungsform sind daher die organischen Reste mit Hydroxy- oder Epoxidgruppen von einer Oberflächenmodifizierung mit einem Silan, das an einem nicht hydrolysierbaren Substituenten eine Epoxid- aufweist, abgeleitet.

Es handelt es sich um ein oder mehrere Silane der allgemeinen Formel

Rh(R)_{b}SiX_{(3-b)} (I)

worin der Rest Rh einen nicht hydrolysierbaren Substituenten darstellt, der eine Epoxidgruppe oder eine Hydroxygruppe aufweist, die Reste R gleich oder verschieden sind und andere nicht hydrolysierbare Substituenten sind, die Reste X gleich oder verschieden sind und hydrolysierbare Gruppen oder Hydroxygruppen bedeuten und b 0,1 oder 2 ist. Der Wert b ist bevorzugt 0, d. h., es handelt sich bevorzugt um ein Silan der Formel RhSiX₃.

In der allgemeinen Formel (I) sind die hydrolysierbaren Gruppen X, die gleich oder voneinander verschieden sein können, beispielsweise Wasserstoff, Hydroxy oder Halogen (F, Cl, Br oder I), Alkoxy (vorzugsweise C₁₋₆-Alkoxy, wie z. B. Methoxy, Ethoxy, n-Propoxy, i-Propoxy und Butoxy), Aryloxy (vorzugsweise C₆₋₁₀-Aryloxy, wie z. B. Phenoxy), Acyloxy (vorzugsweise C₁₋₆-Acyloxy, wie z. B. Acetoxy oder Propionyloxy), Alkylcarbonyl (vorzugsweise C₂₋₇-Alkylcarbonyl, wie z. B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen und Acyloxygruppen. Besonders bevorzugte hydrolysierbare Reste sind C₁₋₄-Alkoxygruppen, insbesondere Methoxy und Ethoxy.

Bei den nicht hydrolysierbaren Resten R kann es sich um nicht hydrolysierbare Reste R mit einer funktionellen Gruppe oder um nicht hydrolysierbare Reste R ohne eine solche funktionelle Gruppe handeln. Wie gesagt ist der Rest R bei diesen Silanen bevorzugt nicht vorhanden. Wenn er vorliegt, weist er bevorzugt keine funktionelle Gruppe auf.

Die nicht hydrolysierbaren Reste R der Formel (I) sind z.B. Alkyl (z.B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl), Alkenyl (z.B. C₂₋₂₀-Alkenyl, insbesondere C₂₋₆-Alkenyl, wie Vinyl, 1-Propenyl, 2-Propenyl und Propargyl), Alkinyl (z.B. C₂₋₂₀-Alkinyl, insbesondere C₂₋₄-Alkinyl, wie Acetylenyl oder Propargyl), Aryl (insbesondere C₆₋₁₀-Aryl, wie Phenyl und Naphthyl) und entsprechende Aralkyl- und Alkarylgruppen, wie Tolyl und Benzyl, und cyclische C₃-C₁₂-Alkyl- und -Alkenylgruppen, wie Cyclopropyl, Cyclopentyl und Cyclohexyl. Die Reste R und X können gegebenenfalls einen oder mehrere übliche Substituenten, wie z.B. Halogen oder Alkoxy, aufweisen.

Der nicht hydrolysierbare Rest R mit einer funktionellen Gruppe kann z.B. als funktionelle Gruppe eine Ether-, Dialkylamino-, gegebenenfalls substituierte Anilino-, Amid-, Acryl-, Acryloxy-, Methacryl-, Methacryloxy-, Cyano-, Alkoxy-, Aldehyd-, Alkylcarbonyl- und Phosphorsäuregruppe umfassen. Diese funktionellen Gruppen sind über Alkylen-, Alkenylen- oder Arylen-Brückengruppen, die durch Sauerstoff- oder -NH-Gruppen (H kann auch durch eine Alkylgruppe ersetzt sein) unterbrochen sein können, an das Siliciumatom gebunden. Die Brückengruppen enthalten vorzugsweise 1 bis 18, vorzugsweise 1 bis 8 und insbesondere 1 bis 6 Kohlenstoffatome.

Die genannten zweiwertigen Brückengruppen und gegebenenfalls vorliegende Substituenten, wie bei den Alkylaminogruppen, leiten sich z.B. von den oben genannten einwertigen Alkyl-, Alkenyl- oder Arylresten ab. Natürlich kann der Rest R auch mehr als eine funktionelle Gruppe aufweisen.

Der Rest Rh ist ein nicht hydrolysierbarer Substituent, der eine Epoxidgruppe oder eine Hydroxygruppe aufweist. Rh entspricht der Gruppe R, wobei die funktionelle Gruppe eine Epoxid- oder Hydroxygruppe ist, so dass alles vorstehend für R gesagte entsprechend gilt. Bevorzugte Beispiele für nicht hydrolysierbare Reste Rh mit Epoxidgruppe sind ein Epoxy- oder ein Glycidyloxy-(C₁₋₂₀)-alkyl-Rest, wie β-Glycidyloxyethyl, γ-Glycidyloxypropyl, δ-Glycidyloxybutyl, ε-Glycidyloxypentyl, ω-Glycidyloxyhexyl, Epoxybutyl, Epoxypropyl und 2-(3, 4-Epoxycyclohexyl)ethyl, oder ein Hydroxy-(C₁₋₂₀)-alkyl-Rest, wobei der Alkylrest durch gegebenenfalls substituierte Aminogruppen unterbrochen sein kann. Besonders bevorzugt ist γ-Glycidy|oxypropyl.

Bevorzugte Verbindungen sind γ-Glycidyloxyalkyltrialkoxysilane, Epoxyalkyltri(m)ethoxysilane oder 2-(3,4-Epoxycyclohexyl)alkyltri(m)ethoxysilane ((m)ethoxy = methoxy oder ethoxy), wobei die Alkylgruppe 2 bis 6 C-Atome aufweisen kann. Erfindungsgemäße Silane sind γ-Glycidyloxypropyltrimethoxysilan (GPTS), γ-Glycidyloxypropyltriethoxysilan (GPTES), 3,4-Epoxybutyltrimethoxysilan, 2-(3,4-Epoxycyclohexyl)ethyltrimethoxysilan. Erfindungsgemäß besonders geeignete Silane der Formel (I) sind γ-Glycidyloxypropyltrimethoxysilan (GPTS) und γ-Glycidyloxypropyltriethoxysilan (GPTES).

Die organischen Reste mit Gruppen mit aktivem Wasserstoff oder einer Vorstufe enthalten mindestens eine Gruppe mit aktivem Wasserstoff oder eine Vorstufe, bei einer bevorzugten Ausführungsform ergibt die Oberflächenmodifizierung organische Reste, die mehr als eine Gruppe mit aktivem Wasserstoff oder Vorstufe enthalten. Solche organischen Reste mit mindestens zwei Gruppen mit aktivem Wasserstoff ergeben sich z. B., wenn ein Epoxysilan mit einem hydrolysierbaren Rest an das Nanopartikel ankondensiert und mit einem weiteren hydrolysierbaren Rest mit einem zweiten Epoxysilan kondensiert. Diese Reaktion kann weiter fortschreiten, so dass man an einem organischen Rest zwei oder mehr Epoxgruppen bzw. nach Überführung zwei oder mehr Hydroxygruppen erhält. In diesem Sinne kann man bei dieser bevorzugten Ausführungsform auch von Polyolresten oder deren Vorstufen auf den Nanopartikeln sprechen. Natürlich können auch Oberflächenmodifizierungsmittel mit zwei verschieden funktionellen

Gruppen oder Mischungen verschiedener Oberflächenmodifizierungsmittel eingesetzt werden, so dass man zu Nanopartikeln mit verschiedenen Gruppen mit aktivem Wasserstoff kommt.

In einer alternativen Ausführungsform können die Nanopartikel zuerst einer ersten Oberflächenmodifizierung unterzogen werden, wodurch neue funktionelle Gruppen auf der Oberfläche der Nanopartikel gebildet werden, über die mit einem zweiten Oberflächenmodifizierungsmittel die organischen Reste mit Gruppen mit aktivem Wasserstoff oder den Vorstufen davon angebunden werden können. Auf diese Weise werden die Gruppen mit aktivem Wasserstoff oder die Vorstufen davon, insbesondere die Hydroxy- oder Epoxidgruppen, indirekt auf die Nanopartikel aufgebracht und man erhält eine Zweischichtstruktur. Durch diese zusätzliche Verfahrensweise ist eine höhere Variabilität möglich. Es können so z. B. Oberfächenmodifizierungsmittel mit Gruppen mit aktivem Wasserstoff oder Vorstufen davon angebunden werden, die für das speziell interessierende unmodifizerte Nanopartikel über keine Anbindungsgruppe verfügen, die aber über die mit dem ersten Oberflächenmodifizierungsmittel aufgebrachte funktionelle Gruppe angebunden werden können. Zum Beispiel kann mit einem ersten Oberflächenmodifizierungsmittel eine Carbonsäuregruppe als funktionelle Gruppe auf der Oberfläche eingeführt werden, die dann mit einem Polyol als zweitem Oberflächenmodifizierungsmittel reagieren kann.
Die Oberflächenmodifizierung mit dem ersten und dem zweiten Oberflächenmodifizierungsmittel erfolgt dabei auf genau die gleiche Weise wie bei der oben beschriebenen direkten Oberflächenmodifizierung, so dass alles vorstehend gesagte entsprechend gilt. Bei dem (zweiten) Oberflächenmodifizierungsmittel mit der Gruppe mit aktivem Wasserstoff handelt es sich um vorstehend beschriebene. Als erstes Oberflächenmodifizierungsmittel eignen sich bifunktionelle Verbindungen, deren eine funktionelle Gruppe als Anbindungsgruppe zum Nanopartikel dienen kann und deren zweite funktionelle Gruppe zur Anbindung des zweiten Oberflächenmodifizierungsmittels dient. Beispiele für geeignete Anbindungsgruppen, Molekulargewichte und Anbindungsarten an die Nanopartikel sind identisch wie oben für das Oberflächenmodifizierungsmittel zur Oberflächenmodifizierung mit organischen Resten mit Gruppen mit aktivem Wasserstoff oder Vorstufen davon beschrieben. Die funktionelle Gruppe kann auch aus den für die Anbindungsgruppe beschrieben Gruppen ausgewählt sein, wobei funktionelle Gruppe und Anbindungsgruppe gleich oder verschieden sein können.

Beispiele für das in der alternativen Ausführungsform verwendete erste Oberflächenmodifizierungsmittel sind die für die direkte Anbindung bereits beschriebenen Modifizierungsmittel, es können aber natürlich auch Oberflächenmodifizierungsmittel verwendet werden, die als funktionelle Gruppe keine Gruppe mit aktivem Wasserstoff oder eine Vorstufe davon aufweisen. Beispiele hierfür sind ungesättigte Carbonsäuren, β-Dicarbonyl-Verbindungen, z.B. β-Diketone oder β-Carbonylcarbonsäuren, ethylenisch ungesättigte Amine oder Amine mit einer weiteren funktionellen Gruppe, wie Aminosäuren. Diese und folgende Modifizierungsmittel können natürlich auch zur direkten Anbindung der Gruppen mit aktivem Wasserstoff oder der Vorstufen verwendet werden, wenn sie diese Gruppen enthalten.

Beispiele für Verbindungen, die zur Oberflächenmodifizierung verwendet werden, sind gesättigte oder ungesättigte Mono- und Polycarbonsäuren z.B. mit 1 bis 12 Kohlenstoffatomen (z.B. Acrylsäure, Methacrylsäure, Crotonsäure, Citronensäure, Adipinsäure, Bernsteinsäure, Glutarsäure, Oxalsäure, Maleinsäure und Fumarsäure) sowie deren Anhydride, Ester (vorzugsweise C₁-C₄-Alkylester) und Amide.

Beispiele für weitere geeignete Oberflächenmodifikatoren sind quaternäre Ammoniumsalze der Formel NR¹R²R³R⁴⁺X⁻, worin R¹ bis R⁴ gegebenenfalls voneinander verschiedene aliphatische, aromatische oder cycloaliphatische Gruppen mit vorzugsweise 1 bis 12, insbesondere 1 bis 8 Kohlenstoffatomen darstellen, wie z.B. Alkylgruppen mit 1 bis 12, insbesondere 1 bis 8 und besonders bevorzugt 1 bis 6 Kohlenstoffatomen (z.B. Methyl, Ethyl, n- und i-Propyl, Butyl oder Hexyl), und X⁻ für ein anorganisches oder organisches Anion steht, z.B. Acetat, OH⁻, Cl⁻, Br⁻ oder l⁻; Mono- und Polyamine, insbesondere solche der allgemeinen Formel R'₃₋ₙNHₙ, worin n = 0, 1 oder 2 und die Reste R' unabhängig voneinander Alkylgruppen mit 1 bis 12, insbesondere 1 bis 8 und besonders bevorzugt 1 bis 6 Kohlenstoffatomen darstellen (z.B. Methyl, Ethyl, n- und i-Propyl, Butyl oder Hexyl) und Ethylenpolyamine (z.B. Ethylendiamin, Diethylentriamin etc.); Aminosäuren; Imine; β-Dicarbonylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C₁-C₄-alkylester ; und Silane, wie z. B. die hydrolysierbaren Silane mit mindestens einer nicht hydrolysierbaren Gruppe der obigen Formel (I) oder der unten erläuterten Formeln (II) und (III), wobei ein nicht hydrolysierbarer Rest eine funktionelle Gruppe aufweist.

Die Zusammensetzung enthält ferner ein Isocyanat. Es kann sich um ein herkömmliches, dem Fachmann bekanntes Isocyanat handeln. Das Isocyanat kann ein, zwei oder mehr Isocyanatgruppen aufweisen, vorzugsweise weist es mindestens zwei Isocyanatgruppen auf.

Das Isocyanat dient zur Vemetzung der oberflächenmodifizierten Nanopartikel. Das Isocyanat wird dabei in blockierter Form verwendet, um zu verhindern, dass eine unkontrolliert schnelle Reaktion einsetzt. Bei gezielter Entblockierung, z. B. durch Erwärmen, kann eine gezielte Vernetzung der Gruppe mit aktivem H, z. B. der Hydroxylfunktion mit der Isocyanatfunktion zu einem Polyurethan, durchgeführt werden.

Die Blockierung der Isocyanate ist ein dem Fachmann bekanntes Verfahren zur reversiblen Herabsetzung der Reaktivität von Isocyanaten. Zur Blockierung der Isocyanate kommen alle gängigen Blockierungsmittel in Betracht, wie z. B. Acetonoxim, Cyclohexanonoxim, Methylethylketoxim, Acetophenonoxim, Benzophenonoxim, 3,5-Dimethylpyrazol, 1,2, 4-Triazol, Malonsäureethylester, Acetessigsäureethylester, ε-Caprolactam, Phenol, Ethanol, wobei erfindungsgemäß 1,2,4-Triazol bevorzugt ist. Die Blockierung kann ohne Lösungsmittel durch Aufschmelzen des Blockierungsmittels und Zugabe des Isocyanats erfolgen, aber auch mit Lösungsmittel bei Raumtemperatur unter Zugabe eines Katalysators. Aprotische Lösungsmittel, die sich hierfür eignen, sind z. B. Aceton, Dioxan, Ethylacetat, Butylacetat oder Toluol.

Bei den Isocyanaten handelt es sich um Isocyanatsilane. Die Isocyanatsilane sind insbesondere hydrolysierbare Silane, die an einem nicht hydrolysierbaren Rest eine Isocyanatgruppe aufweisen, oder Kondensate davon. Sofern monomere Isocyanatsilane eingesetzt werden, können in der Zusammensetzung in situ bi- oder mehrfunktionelle Kondensate gebildet werden.

Auch die Isocyanatsilane werden in blockierter Form eingesetzt. Die Kondensate werden dabei vorzugsweise aus den monomeren Isocyanatsilanen nach dem nachstehend beschriebenen Sol-Gel-Verfahren hergestellt. Dabei ist es häufig sinnvoll bzw. erforderlich, bereits die Ausgangsmomonere zu blockieren, um zu vermeiden, dass bei der Kondensatbildung Nebenreaktionen auftreten.

Bevorzugt handelt es sich bei den Isocyanatsilanen um ein oder mehrere Silane der allgemeinen Formel

Ri(R)_{b}SiX_{(3-b)} (II)

worin der Rest Ri einen nicht hydrolysierbaren Substituenten darstellt, der eine Isocyanatgruppe aufweist, die Reste R gleich oder verschieden sind und andere nicht hydrolysierbare Substituenten sind, die Reste X gleich oder verschieden sind und hydrolysierbare Gruppen oder Hydroxygruppen bedeuten und b 0,1 oder 2 ist, oder um Kondensate auf Basis dieser Isocyanatsilane. Die Substituenten R und X sind wie in Formel (I) definiert, wobei R vorzugsweise ein nicht hydrolysierbarer Substituent ohne funktionelle Gruppe ist und besonders bevorzugt eine Alkylgruppe mit 1 bis 10 C-Atomen ist und X bevorzugt eine Alkoxgruppe mit 1 bis 10 C-Atomen, bevorzugt Methoxy oder Ethoxy ist.

Ri entspricht der Gruppe R, wobei die funktionelle Gruppe eine Isocyanatgruppe ist, so dass alles vorstehend für R gesagte entsprechend gilt. Bevorzugte Beispiele für nicht hydrolysierbare Reste Ri mit Isocyanatgruppe sind ein Isocyanato-(C₁₋₁₂)-alkylRest, z. B. ein 3-Isocyanatopropylrest. Konkrete Beispiele für entsprechende Silane sind 3-lsocyanatopropyltri(m)ethoxysilan und 3-Isocyanatopropyldimethylchlorsilan.

Nicht erfindungsgemäß ist die Verwendung von organischen Isocyanaten. Bei den organischen Isocyanaten kann es sich um übliche Polyisocyanate handeln, z. B. monomere Polyisocyanate, Polyisocyanat-Addukte, sogenannte modifizierte Polyisocyanate oder Mischungen davon. Die Polyisocyanate enthalten bevorzugt mindestens 2 Isocyanatgruppen. Diese sind dem Fachmann bekannt und im Handel erhältlich und z.B. in G. Oertel, Polyurethane Handbook, Hanser-Verlag 1993 und in "Methoden der organischen Chemie" (Houben-Weyl), Bd. 14/2, Thieme Verlag, 1963, beschrieben. Die Addukte können z.B. eine mittlere NCO-Funktionalität von 2 bis 6, bevorzugt 2,4 bis 4 aufweisen. Bei Mischungen aus monomeren Polyisocyanaten und Polyisocyanat-Addukten ergibt sich eine mittlere Funktionalität, die auch im vorschriebenen Rahmen liegen kann.

Bei den Polyisocyanat-Addukten handelt es sich z.B. um solche, die üblicherweise als Härter für zweikomponentige Urethanlacke Verwendung finden und in "Lackharze: Chemie, Eigenschaften und Anwendungen", Hrsg. D. Stoye, W. Freitag, Hanser Verlag München, Wien, 1996, beschreiben sind. Diese Polyisocyanat-Addukte enthalten vorzugsweise Isocyanurat-, Biuret-, Allophanat- und/oder Uretdiongruppen und weisen mittlere NCO-Funktionalitäten von z.B. 2 bis 6 sowie einen -NCO-Gehalt von z.B. 5 bis 30 Gew.-% auf. Zusätzlich können die Polyisocyanate monomere Polyisocyanate und/oder andere Polyisocyanat-Addukte, z.B. mit Urethan-, Carbodiimid- und/oder Iminoxadiazindion-Strukturen enthalten. Es kann sich z.B. um Trimerisate (Isocyanurate) von 1,6-Hexamethylendiisocyanat mit einer mittleren NCO-Funktionalität von 3 bis 4 und einem NCO-Gehalt von 15 bis 25 Gew.-% handeln.

Bei den monomeren Polyisocyanaten handelt es sich um Isocyanate, die zwei oder mehr Isocyanatgruppen enthalten, bevorzugt handelt es sich um solche, die zwei Isocyanatgruppen enthalten. Beispiele für monomere Isocyanate, die drei oder mehr Isocyanatgruppen enthalten, sind 4-Isocyanatomethyl-1,8-octandiisocyanat und aromatische Polyisocyanate wie 4,4',4"-Triphenylmethantriisocyanat oder Polyphenylpolymethylenpolyisocyanate.

Monomere Isocyanate, die zwei Isocyanatgruppen enthalten, werden im allgemeinen durch die allgemeine Formel Z(NCO)₂ repräsentiert, wobei Z für einen difunktionellen organischen Rest steht, der z.B. ein Molekulargewicht von 50 bis 1.000, bevorzugt von 70 bis 320 aufweist. Bevorzugt sind Diisocyanate, bei denen Z ein difunktioneller C₄-C₄₀-Kohlenwasserstoffrest ist, bevorzugt ein difunktioneller aliphatischer C₄-C₁₈-Rest, ein difunktioneller cycloaliphatischer C₄-C₁₅-Rest, ein difunktioneller araliphatischer C₇-C₁₅-Rest oder einen difunktioneller aromatischer C₆-C₁₅-Rest.

Beispiele für Isocyanate sind die aus der Polyurethanchemie bekannten Diisocyanate, wie z. B. 1, 3-Diisocyanatobenzol, 2,4 und 2,6-Toluylendiisocyanat (TDI), 1,6-Hexamethylendiisocyanat (HMDI), 4,4'- und 2,4-Diphenylmethandiisocyanat (MDI), Naphthylendiisocyanat, Xylylendiisocyanat, Isophorondiisocyanat, Paraphenyldiisocyanat, Dicyclohexylmethandiisocyanat, Cyclohexyldiisocyanat, Polymethylpolyphenylisocyanat, 1,6-Dodecamethylendiisocyanat, 1,4-Bis(isocyanatocyclohexyl)methan, Pentamethylendiisocyanat, Trimethylendiisocyanat, Triphenylmethandiisocyanat, sowie die aus diesen Diisocyanaten abgeleiteten höhermolekulare Polyisocyanate z. B. auf Isocyanurat-, Uretdion-, Allophanat-und Biuretbasis. Die Isocyanate sind z. B. unter den Handelsbezeichnungen Desmodur® und Baymidur® (von Bayer), CARADATE® (von Shell), TEDIMON® (von Enichem) und LUPRANAT® (von BASF) erhältlich.

In der Zusammensetzung können die Nanopartikel (ohne Oberflächenmodifizierung) in einem Anteil von 1 bis 40 Gew.-%, bevorzugt 10 bis 30 Gew.-%, bezogen auf den Feststoffgehalt der Zusammensetzung, vorhanden sein. Das Gewichtsverhältnis Nanopartikel/Oberflächenmodifizierungsmittel beträgt im allgemeinen 1:1 bis 1:7, bevorzugt 1:1 bis 1:2. Das Molverhältnis von (gegebenenfalls blockierten) Isocyanatgruppen/Gruppe mit aktivem Wasserstoff (insbesondere Hydroxygruppen) beträgt im allgemeinen z. B. 1/9 bis 8/2, vorzugsweise wird das Verhältnis so gewählt, dass ein ungefähr stöchiometrisches Verhältnis bezüglich der reaktiven Gruppen besteht (NCO/aktives H, z. B NCO/OH, ca. 1, z. B. zwischen 0,9 und 1,1).

In der Zusammensetzung können weitere Additive enthalten sein, die in der Technik üblicherweise je nach Zweck und gewünschten Eigenschaften zu Beschichtungszusammensetzungen oder Zusammensetzungen für Formkörper zugegeben werden. Konkrete Beispiele sind Thixotropiermittel, Lösungsmittel bzw. Dispergiermittel, andere matrixbildende Komponenten, Polyole, organische und anorganische Farbpigmente, auch im nanoskaligen Bereich, Metallkolloide, z.B. als Träger optischer Funktionen, Farbstoffe, UV-Absorber, Gleitmittel, Verlaufmittel, Netzmittel, Haftvermittler und Katalysatoren.

Als Lösungsmittel (Dispergiermittel) können z.B. für Beschichtungen übliche Lösungsmittel verwendet werden. Ein besonders bevorzugtes. Lösungsmittel ist Wasser, insbesondere entionisiertes Wasser. Als organische Lösungsmittel eignen sich sowohl polare als auch unpolare und aprotische Lösungsmittel. Beispiele hierfür sind Alkohole, vorzugsweise niedere aliphatische Alkohole (C₁-C₈-Alkohole), wie Methanol, Ethanol, 1-Propanol, i-Propanol und 1-Butanol, Ketone, vorzugsweise aliphatische Ketone, wie Aceton, Methylketon und Methylisobutylketon, Ester, wie 2-Methoxypropylacetat, Butylacetat und Ethylacetat, Ether, vorzugsweise niedere Dialkylether, wie Diethylether, cyclische Ether, wie Dioxan oder THF, oder Monoether von Diolen, wie Ethylenglycol oder Propylenglycol, mit C₁-C₈-Alkoholen, aromatische oder aliphatische Kohlenwasserstoffe, wie Hexan, Heptan, Petrolether, Toluol und Xylol, Amide, wie Dimethylformamid, und deren Gemische. Protische Lösungsmittel sollten einen Siedepunkt unterhalb der Deblockierungstemperatur des blockierten Isocyanats besitzen um Nebenreaktionen zu minimieren. Beispiele sind aliphatische Alkohole mit 1 bis 4 Kohlenstoffatomen.

Ferner können organische Polyole zugegeben werden, die einen Teil der Vernetzung mit den Isocyanaten übernehmen können, so dass Eigenschaften (z.B. Flexibilität) der erhaltenen Schichten oder Formkörper ohne weiteres eingestellt werden können. Durch die Polyole wird der organische Anteil in der Zusammensetzung erhöht. Ihr Einsatz kann auch wirtschaftlich von Vorteil sein. Als Polyolverbindungen können einfache Diole, Triole und höhere Alkohole eingesetzt werden. Sie können z.B. aliphatisch, cycloaliphatisch oder aromatisch sein. Beispiele für einsetzbare Polyole sind z.B. Ethylenglycol, Diethylenglycol, 1,2-, 1,3- und 1,4-Butandiol, 1,5- und 2,4-Pentandiol, 1,6- und 2,5-Hexandiol, 1,4-Cyclohexandiol, Glycerin, Trimethylolethan, Trimethylolpropan, 2,2-Bis-(4-hydroxyphenylpropan) (Bisphenol A), Trishydroxyphenylethan, Pentaerythrit und Polyethylenglycol.

Die Zusammensetzung kann Katalysatoren für die Urethanbildungsreaktion oder die entsprechenden Reaktionen enthalten. Beispiele sind aus der Polyurethanchemie bekannte Zinnverbindungen (z.B. Dibutylzinndilaurat, Dibutylzinndiacetat, Zinnoctoat) oder Amine (z.B. Triethylamin, Chinuclidin, DABCO).

Die Zusammensetzung kann zusätzlich ein organisch modifiziertes anorganisches oder rein anorganisches Polykondensat oder dessen Vorstufen als matrixbildende Komponente enthalten. Dann werden Zusammensetzungen enthalten, die nach der Härtung eine Matrix aus einem organisch modifizierten anorganischen oder rein anorganischen Polykondensat mit darin enthaltenen nanoskaligen Feststoffteilchen, die über die Polyisocyanat-Komponente vernetzt sind, ergeben (Nanomerkomposit).

Die organisch modifizierten anorganischen oder rein anorganischen Polykondensate können durch Hydrolyse und Kondensation von hydrolysierbaren Ausgangsverbindungen nach dem Sol-Gel-Verfahren erhalten werden. Dies kann vor Zugabe der weiteren Komponente der Zusammensetzung erfolgen oder in situ in Anwesenheit einer oder mehrerer Komponenten der Zusammensetzung.

Die organisch modifizierten anorganischen Polykondensate oder deren Vorstufen umfassen vorzugsweise Polyorganosiloxane oder deren Vorstufen. Die organisch modifizierten anorganischen Polykondensate oder Vorstufen davon können auch organische Reste mit funktionellen Gruppen enthalten. Beschichtungszusammensetzungen auf Basis organisch modifizierter anorganischer Polykondensate sind z.B. in DE 19613645, WO 92/21729 und WO 98/51747 beschrieben, auf die vollinhaltlich Bezug genommen wird.

Die Herstellung der organisch modifizierten anorganischen Polykondensate oder deren Vorstufen erfolgt vorzugsweise durch Hydrolyse und Kondensation von hydrolysierbaren Ausgangsverbindungen nach dem Sol-Gel-Verfahren. Unter Vorstufen werden dabei insbesondere Vorhydrolysate und/oder Vorkondensate der hydrolysierbaren Ausgangsverbindungen mit geringerem Kondensationsgrad verstanden. Beim Sol-Gel-Verfahren werden die hydrolysierbaren Verbindungen mit Wasser, gegebenenfalls durch Erwärmen oder saure oder basische Katalyse, hydrolysiert und teilweise kondensiert. Es können stöchiometrische Wassermengen, aber auch geringere oder größere Mengen verwendet werden. Das sich bildende Sol kann durch geeignete Parameter, z.B. Kondensationsgrad, Lösungsmittel oder pH-Wert, auf die für die Zusammensetzung gewünschte Viskosität eingestellt werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Bei den hydrolysierbaren Ausgangsverbindungen handelt es sich um Verbindungen mit hydrolysierbaren Gruppen, wobei zweckmäßigerweise zumindest ein Teil, z.B. mindestens 10 Mol-%, dieser Verbindungen auch nicht hydrolysierbare Gruppen umfasst. Sofern keine Verbindungen mit nicht hydrolysierbaren Gruppen eingesetzt werden, werden rein anorganische Polykondensate erhalten. Prinzipiell können Silane ohne Isocyanatgruppen gemeinsam mit den vorstehend beschriebenen Isocyanatsilanen kondensiert werden, so dass modifizierte Isocyanatsilankondensate erhalten werden.

Als hydrolysierbare Ausgangsverbindungen, die mindestens eine nicht hydrolysierbare Gruppe aufweisen, werden bevorzugt hydrolysierbare Organosilane oder Oligomere davon eingesetzt. Es kann sich demnach um ein z.B. nach dem Sol-Gel-Verfahren erhältliches Polykondensat oder Vorstufen davon auf Basis von einem oder mehreren Silanen der allgemeinen Formel

RₐSiX₍₄₋ₐ₎ (III)

handeln, worin die Reste R gleich oder verschieden sind und nicht hydrolysierbare Gruppen darstellen, die Reste X gleich oder verschieden sind und hydrolysierbare Gruppen oder Hydroxygruppen bedeuten und a den Wert 1, 2 oder 3 hat, oder einem davon abgeleiteten Oligomer. Der Wert a ist bevorzugt 1. Die Reste R und X sind wie vorstehend in den Formeln (I) und (II) definiert. Bei den nicht hydrolysierbaren Resten R, die gleich oder voneinander verschieden sein können, kann es sich um nicht hydrolysierbare Reste R mit einer funktionellen Gruppe oder vorzugsweise um nicht hydrolysierbare Reste R ohne eine solche funktionelle Gruppe handeln.

Es können auch organisch modifizierte anorganische Polykondensate oder Vorstufen davon verwendet werden, die zumindest teilweise organische Reste aufweisen, welche mit Fluor substituiert sind. Derartige Silane werden in der WO 92/21729 detailliert beschrieben. Hierfür können vorzugsweise hydrolysierbare Silanverbindungen mit mindestens einem nicht hydrolysierbaren Rest eingesetzt werden, die die allgemeine Formel

Rf(R)_{b}SiX_{(3-b)} (IV)

aufweisen, worin X und R wie in Formel (I) definiert sind, Rf eine nicht hydrolysierbare Gruppe ist, die 1 bis 30 Fluoratome an Kohlenstoffatome gebunden aufweist, die vorzugsweise durch mindestens zwei Atome, vorzugsweise eine Ethylengruppe, von Si getrennt sind, und b 0, 1 oder 2 ist. R ist insbesondere ein Rest ohne funktionelle Gruppe, bevorzugt eine Alkylgruppe wie Methyl oder Ethyl.

Unter den zur Herstellung der organisch modifizierten anorganischen Polykondensate oder deren Vorstufen verwendeten hydrolysierbaren Ausgangsverbindungen können gegebenenfalls auch teilweise Verbindungen ohne nicht hydrolysierbare Gruppen verwendet werden. Dabei handelt es sich insbesondere um Verbindungen von glas- oder keramikbildenden Elementen, insbesondere Verbindungen mindestens eines Metalls M aus den Hauptgruppen III bis V, insbesondere III und IV, und/oder den Nebengruppen II bis V des Periodensystems der Elemente. Vorzugsweise handelt es sich um hydrolysierbare Verbindungen von Si, Al, B, Sn, Ti, Zr, V oder Zn, insbesondere solche von Si, Al, Ti oder Zr, oder Mischungen aus zwei oder mehreren dieser Metalle. In geringen Mengen (nicht mehr als 40 und insbesondere nicht mehr als 20 Mol-% des Polykondensats) der insgesamt eingesetzten hydrolysierbaren monomeren Verbindungen aus können auch andere hydrolysierbare Verbindungen eingesetzt werden können, insbesondere solche von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthaniden können verwendet werden. Bei Einsatz hochreaktiver hydrolysierbarer Verbindungen (z.B. Aluminumverbindungen) empfiehlt sich die Verwendung von Komplexbildnern, die eine spontane Ausfällung der entsprechenden Hydrolysate nach Zugabe von Wasser verhindern. In der WO 92/21729 sind geeignete Komplexbildner genannt, die bei reaktiven hydrolysierbaren Verbindungen eingesetzt werden können. Sofern nur hydrolysierbare Verbindungen ohne nicht hydrolysierbare Reste verwendet werden, kommt man zu rein anorganischen Kondensaten.

Diese Verbindungen weisen insbesondere die allgemeine Formel MXₙ auf, worin M das vorstehend definierte Metall ist, X wie in Formel (I) definiert ist, wobei zwei Gruppen X durch eine Oxogruppe ersetzt sein können, und n der Wertigkeit des Elements entspricht und meist 3 oder 4 .ist. Bevorzugt werden Alkoxide von Si, Zr und Ti verwendet. Zusammensetzungen auf Basis hydrolysierbarer Verbindungen mit nicht hydrolysierbaren Gruppen und hydrolysierbaren Verbindungen ohne nicht hydrolysierbaren Gruppen sind z.B. in WO 95/31413 (DE 4417405) beschrieben, auf die hiermit Bezug genommen wird.

Als zusätzliche oder einzige Verbindungen ohne nicht hydrolysierbare Gruppen eignen sich insbesondere hydrolysierbare Silane, die z.B. die Formel

SiX₄ (V)

aufweisen, wobei X wie in Formel (I) definiert ist. Konkrete Beispiele sind Si(OCH₃)₄, Si(OC₂H₅)₄, Si(O-n- oder i-C₃H₇)₄, Si(OC₄H₉)₄, SiCl₄. HSiCl₃, Si(OOCC₃H)₄. Von diesen Silanen sind insbesondere Tetramethoxysilan und Tetraethoxysilan bevorzugt. Häufig sind Polykondensate auf Basis eines Silans der Formel (III), insbesondere von einem Alkyltrialkoxysilan, und eines Silans der Formel (V) bevorzugt.

Beispiele für einsetzbare hydrolysierbare Verbindungen von anderen Metallen M sind Al(OCH₃)₃, Al(OC₂H₅)₃, Al(O-n-C₃H₇)₃, Al(O-i-C₃H₇)₃, Al(OC₄H₉)₃, AlCl₃, AlCl(OH)₂, Al(OC₂H₄OC₄H₉)₃, TiCl₄, Ti(OC₂H₅)₄, Ti(O-n-C₃H₇)₄, Ti(O-i-C₃H₇)₄, Ti(OC₄H₉)₄, Ti(2-ethylhexoxy)_{4,} ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylhexoxy)₄, sowie Zr-Verbindungen, die komplexierende Reste aufweisen, wie z.B. β-Diketon- und (Meth)acrylreste, BCl₃, B(OCH₃)₃, B(OC₂H₅)₃, SnCl₄, Sn(OCH₃)₄, Sn(OC₂H₅)₄, VOCl₃ und VO(OCH₃)₃,

Die Zusammensetzungen werden bevorzugt als Beschichtungen eingesetzt. Sofern die Zusammensetzung als Beschichtungszusammensetzung verwendet wird, können alle üblichen Materialien beschichtet werden. Beispiele für ein geeignetes Substrat sind Substrate aus Metall, Halbleiter, Glas, Keramik, Glaskeramik, Kunststoff, Holz, Papier oder anorganisch-organischen Kompositmaterialien. Bei hochtemperaturhärtenden Beschichtungen werden zweckmäßigerweise temperaturstabile Substrate (stabil für mindestens 15 min bei mindestens 130 °C) verwendet, z. B. Metalle, Glas, Keramik oder wärmebeständige Kunststoffe.

Als Beispiele für Metallsubstrate seien z. B. Kupfer, Aluminium, Messing, Eisen, Stahl und Zink genannt. Beispiele für Halbleiter sind Silicium, z. B. in Form von Wafern, und Indium-Zinn-Oxid-Schichten (ITO-Schichten) auf Glas. Als Glas können alle herkömmlichen Glasarten verwendet werden, z. B. Kieselglas, Borosilicatglas oder Kalknatronsilicatglas. Beispiele für Kunststoffsubstrate sind Polycarbonat, Polymethylmethacrylat, Polyacrylate, Polyethylenterephthalat. Insbesondere für optische oder optoelektronische Anwendungen eignen sich transparente Substrate, z. B. aus Glas oder Kunststoff. Die Substrate können vorbehandelt werden, z. B. zur Reinigung, durch eine Coronabehandlung oder mit einer Vorbeschichtung (z. B. einer Lackierung oder einer metallisierten Oberfläche).

Die Zusammensetzung kann auf jede übliche Weise auf das Substrat aufgetragen werden. Es können alle gängigen nasschemischen Beschichtungsverfahren eingesetzt werden. Beispiele sind Schleuderbeschichten, (Elektro)tauchbeschichten, Rakeln, Sprühen, Spritzen, Gießen, Streichen, Fluten, Messergießen, Slot-Coating, Meniskus-Coating, Curtain-Coating und Walzenauftrag.
Die Formkörper oder beschichteten Substrate werden erhalten, indem a) die oberflächenmodizierten Nanopartikel mit den Isocyanaten gemischt werden, wobei der Zusammensetzung gegebenenfalls vorstehend beschriebene Additive zugesetzt werden, b) die Zusammensetzung auf ein Substrat aufgebracht oder in eine Form gebracht wird, und c) unter Ausbildung der Urethanvernetzung gehärtet wird, wobei vor oder während der Härtung eine Deblockierung der Isocyanate erfolgt und Epoxidgruppen in Hydroxygruppen überführt werden, wenn die oberflächenmodifizierten Nanopartikel Epoxidgruppen enthalten.

Die Deblockierung, die Überführung und die Härtung (Vernetzung unter Bildung von Urethanbindungen usw.) können auf übliche Weise erfolgen, z. B. durch Bestrahlen oder Erwärmen. Der notwendige Energieeintrag hängt natürlich von den jeweilig eingesetzten speziellen Verbindungen und gegebenenfalls vorhandenen Katalysatoren ab. In der Regel ist eine thermische Härtung bevorzugt (z. B. bei über 100 C, bevorzugt über 130 C).

Im Rahmen des Härtungsschrittes können auch die gegebenenfalls erforderlichen Deblockierungs- und Umwandlungsschritte erfolgen. Diese können aber auch vor dem Härtungsschritt stattfinden. Z. B. kann die Hydrolyse der Epoxide gegebenenfalls bei Zugabe eines Katalysators bei einer niedrigeren Temperatur erfolgen, die für die Härtung nicht ausreicht. Bei Einsatz nicht blockierter Isocyanate sind mildere Bedingungen für die Härtung möglich. Bei der Härtung werden zur Vernetzung Bindungen, insbesondere Urethanbindungen, zwischen den Nanopartikeln und den Isocyanaten gebildet.

Die erhaltenen Beschichtungen und Formkörper eignen sich wegen ihrer hohen Transparenz und Abriebfestigkeit insbesondere für optische Anwendungen. Sie können z. B. als optische Bauteile oder transparente Schichten auf optischen Bauteilen verwendet werden. Ein besonders geeignetes Anwendungsgebiet sind Beschichtungen von Linsen.

Das folgende Beispiel dient der weiteren Erläuterung der vorliegenden Erfindung.

### Beispiel

In dem Beispiel werden mit 3-Glycidoxypropyltriethoxysilan (GPTES) modifizierte SiO₂-Nanopartikel mit einem blockierten Isocyanat umgesetzt. Das blockierte Isocyanat wird durch Umsetzung von 3-Isocyanatopropyltriethoxysilan (ICPTES) mit 1,2,4-Triazol erhalten. Das Blockierungsmittel wird leicht überstöchiometrisch eingesetzt, um vollständige Umsetzung zu gewährleisten (1:1,1). 1,2,4-Triazol wird unter Stickstoffatmosphäre vorgelegt und bei 135°C Ölbadtemperatur aufgeschmolzen. ICPTES wird über einen Tropftrichter langsam zugegeben. Die Reaktionsdauer beträgt 6 Stunden. Die Reaktionskontrolle erfolgte IR-spektroskopisch über die Isocyanatbande. Zu 2,5 g 3-Glycidoxypropyltriethoxysilan (9 mmol) werden unter starkem Rühren 1,25 g Levasil® 200S/30 (Bayer AG, 30%ige kolloidale Lösung von Siliciumdioxid in Wasser) zugegeben. Die Suspension wird 24 h gerührt. Anschließend werden 2,84 g des Triazol-blockierten ICPTES (9 mmol) mit 0,24 g 0.1 N Salzsäure 30 Minuten vorhydrolysiert und zur Suspension zugegeben. Zu dieser Mischung werden 2,7 g vollentsalztes Wasser zugegeben, so dass der Feststoffgehalt des Sols 39,6 % beträgt. Der theoretische SiO₂-Gehalt im Festkörper beträgt 10 Gewichtsprozent. Das Beschichtungsrhaterial wird mittels Spin-Coating-Technik auf Aluminiumbleche aufgetragen und bei 100°C 10 Minuten vorgehärtet, anschließend wurde 30 Minuten bei 180°C ausgehärtet. Die Beschichtungen waren fest und transparent, die Schichtdicke betrug 10 µm. Die mechanischen Kenndaten von Beschichtungen mit 0 bis 40 Gewichtsprozent SiO₂ im Festkörper wurden mit Hilfe von Mikrohärtemessungen und Taber-Abrader-Tests (Last je Rolle: 500 g, CS-10F-Rollen, 1.000 Zyklen) bestimmt. Die Schichtdicken betrugen 10-11 µm. Die mechanischen Eigenschaften konnten mit zunehmendem SiO₂-Gehalt verbessert werden (Tab. 1).

**Tabelle 1: Veränderung der mechanischen Eigenschaften mit zunehmendem SiO₂-Gehalt.**

| System | SiO₂-Gehalt (Gew.% im Festkörper) | HU [N/mm²] | Wₑ [%] | HUₚₗₐₛₜ [N/mm²] | E-Modul [GPa] | Gewichtsverlust Taber-Abrader [mg] |
|---|---|---|---|---|---|---|
| I | 0 | 202 | 73 | 345 | 4,6 | 2,5 |
| I-10 | 10 | 320 | 70 | 543 | 7,4 | 1,2 |
| I-20 | 20 | 326 | 67 | 591 | 6,9 | 1,2 |
| I-30 | 30 | 370 | 67 | 701 | 7,6 | 1,3 |
| I-40 | 40 | 440 | 65 | 818 | 9,2 | 1,7 |

Die Systeme zeichnen sich durch ausgezeichnete mechanische Beständigkeit aus, herkömmliche Urethansysteme auf iPDI-Basis weisen im Taber-Abrader-Test Gewichtsverluste um die 40 mg auf (Literatur: Baumbach, B., Dearth, M., Küttner, R.S, Noble, K.L., FATIPEC Congress 1998, 24, A-405).

## Patentansprüche

1. Zusammensetzung umfassend oberflächenmodifizierte anorganische nanoskalige Feststoffteilchen, die an der Oberfläche organische Reste mit Hydroxygruppen und/oder Epoxidgruppen aufweisen, und mindestens ein Isocyanatsilan, dessen Isocyanatgruppen blockiert sind, oder Kondensat davon, wobei die anorganischen nanoskaligen Feststoffteilchen aus SiO₂, Al₂O₃, ITO, ATO, AlOOH, Ta₂O₅, ZrO₅ und/oder TiO₂ sind und mit hydrolysierbaren Silanen oberflächenmodifiziert wurden, die an einem nicht hydrolysierbaren Substituenten eine Hydoxygruppe und/oder Epoxidgruppe aufweisen, wobei durch Kondensation dieser Silane mit weiteren Silanen organische Reste erhalten wurden, die mehr als eine Hydoxygruppe und/oder Epoxidgruppe enthalten, und die organischen Reste mit Hydoxygruppen und/oder Epoxidgruppen von der Oberflächenmodifizierung mit Glycidoxypropyltrimethoxysilan, Glycidoxypropyltriethoxysilan, 3,4-Epoxybutyltri(m)ethoxysilan und/oder 2-(3,4-Epoxycyclohexyl)ethyltri(m)ethoxysilan abgeleitet sind.

2. Zusammensetzung nach Anspruch 1, **dadurch gekennzeichnet, dass** sie ferner organische Polyole umfasst.

3. Zusammensetzung nach einem der Ansprüche 1 oder 2 **dadurch gekennzeichnet, dass** sie ferner ein organisch modifiziertes anorganisches Polykondensat umfasst.

4. Zusammensetzung nach einem der Ansprüche 1 bis 3, **dadurch gekennzeichnet, dass** sie ferner einen Katalysator für die Reaktion zwischen der Hydroxygruppe und Isocyanat umfasst.

5. Zusammensetzung nach einem der Ansprüche 1 bis 4, **dadurch gekennzeichnet, dass**, wenn organische Oberflächenreste mit Epoxidgruppen vorhanden sind, diese Epoxidgruppen zur Urethanbindungsbildung in Hydroxygruppen überführbar sind.

6. Formkörper oder beschichtetes Substrat, wobei der Formkörper oder die Schicht des beschichten Substrats eine gehärtete Zusammensetzung nach einem der Ansprüche 1 bis 5 ist, wobei auf der Oberfläche der Feststoffteilchen vorhandene Epoxidgruppen, falls vorhanden, vor oder während der Härtung zur Weiterreaktion in Hydroxygruppen überführt worden sind.

7. Formkörper oder beschichtetes Substrat nach Anspruch 6, bei denen es sich um optische Bauteile oder transparente Schichten auf optischen Bauteilen handelt.

8. Beschichtetes Substrat nach Anspruch 6 oder 7, wobei das Substrat aus Metall, Glas, Kunststoff, Holz oder Papier ist.

9. Beschichtetes Substrat nach einem der Ansprüche 6 bis 8, wobei das Substrat eine Linse ist.

10. Verfahren zur Herstellung eines Formkörpers oder eines beschichteten Substrats nach einem der Ansprüche 6 bis 9, bei welchem
a) oberflächenmodifizierte nanoskalige Feststoffteilchen aus SiO₂, Al₂O₃, ITO, ATO, AlOOH, Ta₂O₅, ZrO₅ und/oder TiO₂, die an der Oberfläche organische Reste mit Hydroxygruppen und/oder Epoxidgruppen aufweisen, mit mindestens einem Isocyanatsilan, wobei mindestens ein Isocyanatsilan blockiert ist, oder Kondensat davon gemischt werden,
b) die erhaltene Zusammensetzung auf ein Substrat aufgebracht oder in eine Form gebracht wird, und
c) unter Ausbildung von Bindungen zwischen den Hydroxygruppen auf den Nanopartikeln und den Isocyanaten gehärtet wird,
wobei vor oder während der Härtung eine Deblockierung der Isocyanate erfolgt, und Epoxidgruppen in Hydroxygruppen überführt werden, wenn die oberflächenmodifizierten Nanopartikel Epoxidgruppen enthalten, wobei die anorganischen nanoskaligen Feststoffteilchen mit Glycidoxypropyltrimethoxysilan, Glycidoxypropyltriethoxysilan, 3,4-Epoxybutyltri(m)ethoxysilan und/oder 2-(3,4-Epoxycyclohexyl)ethyltri(m)ethoxysilan oberflächenmodifiziert wurden, wobei durch Kondensation dieser Silane mit weiteren dieser Silane organische Reste erhalten wurden, die mehr als eine Hydroxygruppe und/oder Epoxidgruppe enthalten und unter Ausbildung von Urethanvernetzung gehärtet wird, wobei Epoxidgruppen in Hydroxygruppen überführt werden, wenn die oberflächenmodifizierten Nanopartikel Epoxidgruppen enthalten.

11. Verwendung eines Formkörpers oder eines beschichteten Substrats nach einem der Ansprüche 6 bis 9 für optische Anwendungen.

12. Verwendung einer Zusammensetzung nach einem der Ansprüche 1 bis 5 zum Beschichten eines Substrats mit einer optisch hochwertigen Schicht.

## Claims

1. Composition comprising surface-modified inorganic nanoscale solid particles which have, on the surface, organic radicals with hydroxyl groups and/or epoxy groups, and at least one isocyanatosilane with blocked isocyanate groups, or condensate thereof, wherein the inorganic nanoscale particles are of SiO₂, Al₂O₃, ITO, ATO, AlOOH, Ta₂O₅, ZrO₂ and/or TiO₂ and have been surface-modified with hydrolyzable silanes which have, on an unhydrolyzable substituent, a hydroxyl group and/or epoxy group, where condensation of these silanes with further silanes gave organic radicals that contain more than one hydroxyl group and/or epoxy group, and the organic radicals having hydroxyl groups and/or epoxy groups are derived from surface modification with glycidoxypropyltrimethoxysilane, glycidoxypropyltriethoxysilane, 3,4-epoxybutyltri(m)ethoxysilane and/or 2-(3,4-epoxycyclohexyl)ethyltri(m)ethoxysilane.

2. Composition according to Claim 1, **characterized in that** it also comprises organic polyols.

3. Composition according to one of Claims 1 and 2, **characterized in that** it also comprises an organically modified inorganic polycondensate.

4. Composition according to one of Claims 1 to 3, **characterized in that** it also comprises a catalyst for the reaction between the hydroxyl group and isocyanate.

5. Composition according to one of Claims 1 to 4, **characterized in that**, when organic surface radicals having epoxy groups are present, these epoxy groups can be converted to hydroxyl groups for urethane bond formation.

6. Molding or coated substrate, said molding or the layer of said coated substrate being a cured composition according to one of Claims 1 to 5, epoxy groups present on the surface of the solid particles, if present, having been converted to hydroxyl groups for further reaction before or during the curing.

7. Molding or coated substrate according to Claim 6, which comprises optical components or transparent layers on optical components.

8. Coated substrate according to Claim 6 or 7, the substrate being made of metal, glass, plastic, wood or paper.

9. Coated substrate according to one of Claims 6 to 8, the substrate being a lens.

10. Process for producing a molding or a coated substrate according to one of Claims 6 to 9, in which
a) surface-modified nanoscale solid particles of SiO₂, Al₂O₃, ITO, ATO, AlOOH, Ta₂O₅, ZrO₅ and/or TiO₂ which have, on the surface, organic radicals with hydroxyl groups and/or epoxy groups are mixed with at least one isocyanatosilane, wherein at least one isocyanatosilane has been blocked, or condensate thereof,
b) the resulting composition is applied to a substrate or introduced into a mold, and
c) curing is effected with formation of bonds between the hydroxyl groups on the nanoparticles and the isocyanates,
wherein the isocyanates are deblocked before or during the curing, and epoxy groups are converted to hydroxyl groups when the surface-modified nanoparticles contain epoxy groups, wherein the inorganic nanoscale solid particles have been surface-modified with glycidoxypropyltrimethoxysilane, glycidoxypropyltriethoxysilane, 3,4-epoxybutyltri(m)ethoxysilane and/or 2-(3,4-epoxycyclohexyl)ethyltri(m)ethoxysilane, wherein condensation of these silanes with further silanes among these gave organic radicals which contain more than one hydroxyl group and/or epoxy group, and curing is effected with formation of urethane crosslinking, wherein epoxy groups are converted to hydroxyl groups when the surface-modified nanoparticles comprise epoxy groups.

11. Use of a molding or of a coated substrate according to one of Claims 6 to 9 for optical applications.

12. Use of a composition according to one of Claims 1 to 5 for coating a substrate with an optically high-value layer.

## Revendications

1. Composition comprenant des particules solides nanométriques inorganiques modifiées en surface, qui comprennent sur la surface des radicaux organiques contenant des groupes hydroxy et/ou leurs groupes époxyde, et au moins un isocyanatosilane, dont les groupes isocyanate sont bloqués, ou un condensat de celui-ci, les particules solides nanométriques inorganiques étant en SiO₂, Al₂O₃, ITO, ATO, AlOOH, Ta₂O₅, ZrO₅ et/ou TiO₂, et ayant été modifiées en surface avec des silanes hydrolysables, qui comprennent un groupe hydroxy et/ou un groupe époxyde sur un substituant non hydrolysable, des radicaux organiques qui contiennent plus d'un groupe hydroxy et/ou groupe époxyde ayant été obtenus par condensation de ces silanes avec d'autres silanes, et les radicaux organiques contenant des groupes hydroxy et/ou des groupes époxyde étant dérivés de la modification de surface avec du glycidoxypropyltriméthoxysilane, du glycidoxypropyltriéthoxysilane, du 3,4-époxybutyltri(m)éthoxysilane et/ou du 2-(3,4-époxycyclohexyl)éthyltri(m)éthoxysilane.

2. Composition selon la revendication 1, **caractérisée en ce qu'**elle comprend en outre des polyols organiques.

3. Composition selon l'une quelconque des revendications 1 ou 2, **caractérisée en ce qu'**elle comprend en outre un polycondensat inorganique modifié organiquement.

4. Composition selon l'une quelconque des revendications 1 à 3, **caractérisée en ce qu'**elle comprend en outre un catalyseur pour la réaction entre le groupe hydroxy et un isocyanate.

5. Composition selon l'une quelconque des revendications 1 à 4, **caractérisée en ce que,** lorsque des radicaux de surface organiques contenant des groupes époxyde sont présents, ces groupes époxyde peuvent être transformés en groupes hydroxy pour la formation de liaisons uréthane.

6. Corps moulé ou substrat revêtu, le corps moulé ou la couche du substrat revêtu étant une composition durcie selon l'une quelconque des revendications 1 à 5, des groupes époxyde présents sur la surface des particules solides, s'ils sont présents, ayant été transformés en groupes hydroxy avant ou pendant le durcissement pour la réaction ultérieure.

7. Corps moulé ou substrat revêtu selon la revendication 6, qui consiste en des composants optiques ou des couches transparentes sur des composants optiques.

8. Substrat revêtu selon la revendication 6 ou 7, dans lequel le substrat est en métal, verre, plastique, bois ou papier.

9. Substrat revêtu selon l'une quelconque des revendications 6 à 8, dans lequel le substrat est une lentille.

10. Procédé de fabrication d'un corps moulé ou d'un substrat revêtu selon l'une quelconque des revendications 6 à 9, selon lequel
a) des particules solides nanométriques modifiées en surface en SiO₂, Al₂O₃, ITO, ATO, AlOOH, Ta₂O₅, ZrO₅ et/ou TiO₂, qui comprennent des radicaux organiques contenant des groupes hydroxy et/ou des groupes époxyde sur la surface, sont mélangées avec au moins un isocyanatosilane, au moins un isocyanatosilane étant bloqué, ou un condensat de celui-ci,
b) la composition obtenue est appliquée sur un substrat ou introduite dans un moule, et
c) un durcissement est réalisé par formation de liaisons entre les groupes hydroxy sur les nanoparticules et les isocyanates,
un déblocage des isocyanates ayant lieu avant ou pendant le durcissement, et les groupes époxyde étant transformés en groupes hydroxy lorsque les nanoparticules modifiées en surface contiennent des groupes époxyde, les particules solides nanométriques inorganiques ayant été modifiées en surface avec du glycidoxypropyltriméthoxysilane, du glycidoxypropyltriéthoxysilane, du 3,4-époxybutyltri(m)éthoxysilane et/ou du 2-(3,4-époxycyclohexyl)éthyltri(m)éthoxysilane, des radicaux organiques qui contiennent plus d'un groupe hydroxy et/ou groupe époxyde ayant été obtenus par condensation de ces silanes avec d'autres de ces silanes, et un durcissement étant réalisé par formation d'une réticulation uréthane, les groupes époxyde étant transformés en groupes hydroxy lorsque les nanoparticules modifiées en surface contiennent des groupes époxyde.

11. Utilisation d'un corps moulé ou d'un substrat revêtu selon l'une quelconque des revendications 6 à 9 pour des applications optiques.

12. Utilisation d'une composition selon l'une quelconque des revendications 1 à 5 pour le revêtement d'un substrat comprenant une couche optique de grande valeur.
